# FASCICULE DE BREVET EUROPEEN

(11) **EP 3 712 500 B1**
(45) Date de publication et mention de la délivrance du brevet: **11.08.2021**
(21) Numéro de dépôt: 20164349.1
(22) Date de dépôt: 19.03.2020
(51) Int. Cl.: F23K 5/14, F02C 7/232

(54) **INJECTEUR DE CARBURANT POUR UNE TURBOMACHINE**
KRAFTSTOFFEINSPRITZER FÜR EIN TURBOTRIEBWERK
FUEL INJECTOR FOR A TURBINE ENGINE

(30) Priorité: 20.03.2019 FR 1902846
(43) Date de publication de la demande: 23.09.2020
(73) Titulaire: SAFRAN AIRCRAFT ENGINES, 75015 Paris (FR)
(72) Inventeur: RODRIGUES, José Roland, 77550 MOISSY-CRAMAYEL (FR); DENEUVILLE, Hugo Charles, 77550 MOISSY-CRAMAYEL (FR)
(74) Mandataire: Ernest Gutmann - Yves Plasseraud S.A.S.

(56) Documents cités:
- CN-U- 205 806 301
- FR-A1- 2 832 492
- US-A1- 2003 070 711

## Description

### Domaine technique de l'invention

La présente invention concerne un injecteur de carburant pour une turbomachine, telle qu'un turboréacteur ou un turbopropulseur d'avion.

### Etat de la technique antérieure

Une turbomachine comporte classiquement une chambre de combustion annulaire comportant à son extrémité amont des injecteurs de carburant, régulièrement répartis, et des moyens d'amenée d'air autour des injecteurs.

Il existe principalement deux types d'injecteurs, à savoir les injecteurs dits aéromécaniques comportant deux circuits de carburant offrant des débits de carburant adaptés à des phases de fonctionnement différentes de la turbomachine, (phase d'allumage, phase de fonctionnement à faible ou à pleine puissance), et les injecteurs dits aérodynamiques qui ne comportent qu'un seul circuit de carburant pour toutes les phases de fonctionnement de la turbomachine.

La demande de brevet FR 2 832 492, au nom de la Demanderesse, décrit un injecteur de type aéromécanique, comportant un circuit primaire de carburant destiné par exemple à une phase d'allumage et de faible puissance, et un circuit secondaire intervenant dans les phases de fonctionnement ultérieures, de moyenne à forte puissance, en complément du circuit primaire. Ce type d'injecteur comporte un corps comprenant des moyens d'admission de carburant sous pression, une soupape d'arrêt montée dans le corps en aval des moyens d'admission et conçue pour s'ouvrir sous une première pression déterminée de carburant et pour rester ouverte au-delà de cette première pression afin d'alimenter un circuit primaire de carburant, et une soupape de dosage montée dans le corps en aval de la soupape d'arrêt et conçue pour s'ouvrir au-delà d'une seconde pression déterminée de carburant, supérieure à la première pression, et pour rester ouverte au-delà de la seconde pression afin d'alimenter un circuit secondaire de carburant.

Le réglage du débit de carburant dans le circuit secondaire est réalisé par l'intermédiaire de fentes de dosage ménagées dans la soupape de dosage et dont les sections de passage varient en fonction de la position de cette soupape, c'est-à-dire en fonction de la pression d'alimentation en carburant. Plus la pression d'alimentation en carburant est élevée, plus les sections de passage des fentes sont grandes.

La soupape de dosage est soumise à l'action d'un ressort élastique de rappel tendant à rappeler la soupape vers une position fermée. Le ressort est un ressort hélicoïdal de structure classique, c'est-à-dire formé par un unique fil métallique de forme générale hélicoïdale et dont les extrémités s'étendent dans un plan globalement perpendiculaire à l'axe du ressort.

En raison de l'effort de flambage et des frottements générés par un tel ressort, les courbes de compression et de détente du ressort sont sensiblement différentes l'une de l'autre, en créant un phénomène d'hystérésis important. La courbe de compression ou de détente représente la variation de l'effort de rappel exercé par le ressort en fonction de la longueur de celui-ci, lors de sa compression ou de sa détente. Ceci mène à des caractéristiques de débit ou de pression du carburant qui sont différentes en phase d'ouverture ou de fermeture de la soupape de dosage, ce qui génère une hétérogénéité entre différents injecteurs de même structure au sein d'une même turbomachine, ou encore des usures par frottement de la soupape de dosage ou des éléments environnants ladite soupape.

### Présentation de l'invention

L'invention vise à remédier à ces inconvénients, de manière simple, fiable et peu onéreuse.

A cet effet, l'invention concerne un injecteur de carburant pour une turbomachine, comportant un corps comprenant une entrée de carburant débouchant dans une chambre amont, et une sortie de carburant reliée à une chambre aval, une soupape de dosage étant montée entre la chambre amont et la chambre aval, ladite soupape étant soumise à l'action d'un ressort élastique de rappel tendant à rappeler la soupape vers une position fermée, le ressort et la soupape étant conçus pour autoriser l'ouverture de la soupape et autoriser le passage de carburant de la chambre amont à la chambre aval, au-delà d'une pression déterminée de carburant dans la chambre amont, le ressort de rappel s'étendant selon l'axe de déplacement de la soupape, caractérisé en ce que le ressort comporte une première extrémité axiale et une seconde extrémité axiale annulaires, reliées l'une à l'autre par au moins deux parties hélicoïdales élastiquement déformables dans la direction axiale.

Les termes axial et radial sont définis par rapport à l'axe de déplacement de la soupape, qui correspond à l'axe d'extension du ressort.

Une telle structure du ressort permet de limiter l'effort de flambage et la déformation radiale du ressort en fonctionnement, limitant ainsi les frottements et l'hystérésis qui en découle. On garantit ainsi un meilleur fonctionnement des injecteurs.

Le nombre de parties hélicoïdales peut être égal ou supérieur à deux, par exemple égal à trois ou quatre.

Les parties hélicoïdales peuvent être régulièrement réparties sur la circonférence.

Les parties hélicoïdales peuvent présenter un même diamètre, ce qui favorise la bonne répartition des efforts en fonctionnement, de façon à éviter une déformation non homogène ou un flambage du ressort. Une telle caractéristique permet également de réduire l'encombrement radial du ressort. Le nombre de spires peut être compris entre 2 et 6, préférentiellement entre 2 et 3.

Le nombre de spires peut ou non être un nombre entier. Le nombre de spires est par exemple compris entre 3 et 4.

Le ressort peut être réalisé d'une seule pièce en un matériau métallique, par exemple en acier, en titane ou en alliage de titane.

Cet angle est notamment dépendant du nombre de spires et de la distance axial du ressort.

### Brève description des figures

[Fig. 1] est une vue en coupe axiale un injecteur selon une forme de réalisation de l'art antérieur,
[Fig. 2] est une vue de face d'un ressort d'un injecteur selon une forme de réalisation de l'invention.

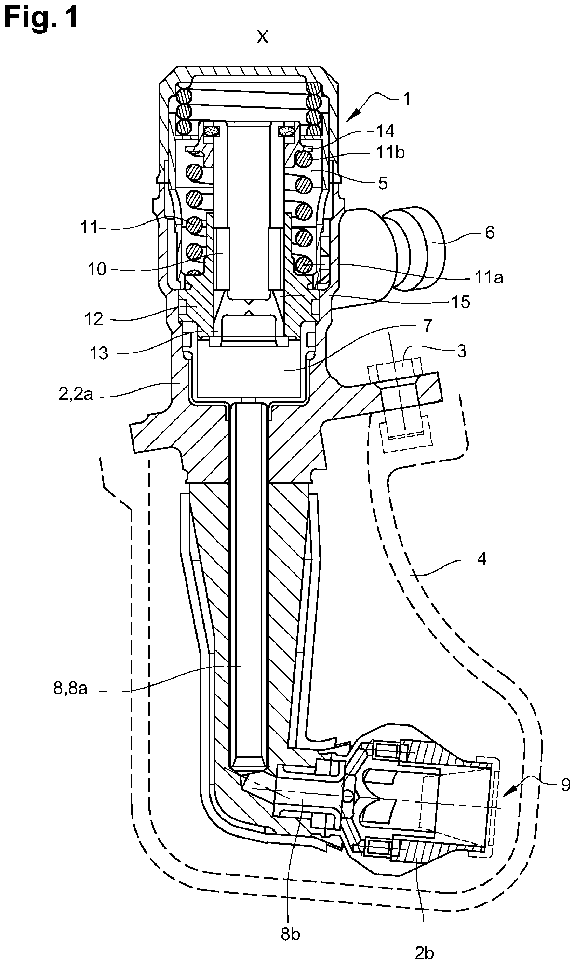

La figure 1 représente un injecteur 1 conformément à l'art antérieur. Celui-ci comporte un corps 2 comportant une partie principale 2a s'étendant selon un axe X et destinée à être fixée par l'intermédiaire de vis 3 sur une partie fixe 4 de la turbomachine, et une partie d'injection 2b s'étendant perpendiculairement à l'axe X, depuis une extrémité dite basse de la partie principale 2a. Les termes haut et bas sont définis par rapport à la figure 1 et n'ont pas nécessairement de lien avec l'orientation réelle de l'injecteur 1 dans la turbomachine.

La partie principale 2a du corps 2 comporte un évidement délimitant une chambre amont 5 dans laquelle débouche une entrée de carburant 6, et une chambre aval 7 reliée à un canal 8 de circulation de carburant débouchant au niveau d'une sortie de carburant 9.

Le canal de circulation de carburant 8 comporte une partie axiale 8a débouchant vers le haut dans la chambre aval 7 et une partie radiale 8b s'étendant sensiblement perpendiculairement à l'axe X, débouchant vers l'extérieur de l'injecteur au niveau de la sortie 9 de manière à former une buse d'injection.

Les chambres amont 5 et aval 7 sont séparées l'une de l'autre par une soupape de dosage 10 qui est mobile entre une position fermée (visible à la figure 1) dans laquelle elle est rappelée vers le haut par un ressort de compression hélicoïdal 11, et une position ouverte dans laquelle est déplacée vers le bas lorsque la pression du carburant dans la chambre amont 5 est supérieure à une pression déterminée. Dans un tel cas, la pression dans la chambre amont 5 exerce un effort axial dirigé vers le bas sur la soupape de dosage 10, à rencontre de l'effort axial de rappel exercé par le ressort 11.

Le ressort 11 comporte une première extrémité axiale 11a, inférieure, et une seconde extrémité axiale 11b, supérieure. La première extrémité axiale 11a est en appui sur un élément fixe 12 monté dans le corps 2 et formant le siège de la soupape 10, en particulier de l'extrémité inférieure 13 de la soupape 10. La seconde extrémité axiale 11b du ressort 11 est en appui sur une collerette annulaire 14 de la soupape 10. Le ressort 11 est formé d'un unique fil métallique dont la forme est globalement hélicoïdale et dont les extrémités axiales 11a, 11b s'étendent globalement dans des plans radiaux.

La partie inférieure de la soupape 10 comporte des fentes 15 dont les géométries sont telles que les sections de passage entre les surfaces délimitant les fentes 15 et l'élément 12 varient en fonction de la position axiale de la soupape de dosage 10.

Comme indiqué précédemment, la structure d'un tel ressort 11 de compression hélicoïdal génère un effort de flambage et des frottements créant un phénomène d'hystérésis qu'il convient d'éviter.

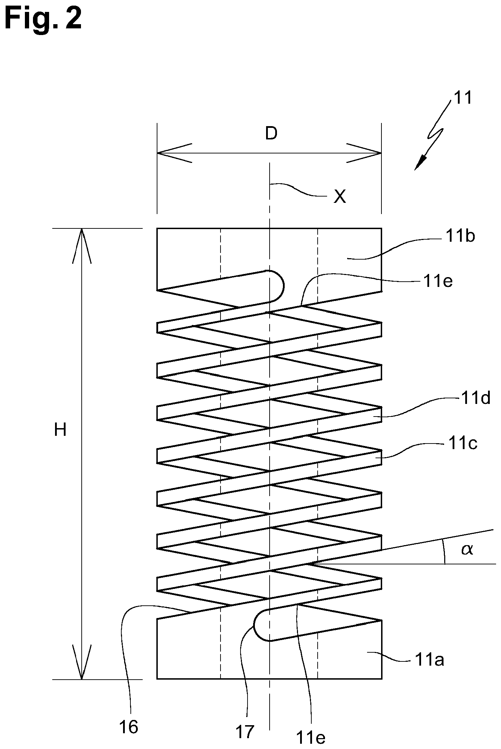

Pour cela l'invention propose de remplacer le ressort 11 décrit en référence à la figure 1 par un ressort 11 dont la structure est représentée à la figure 2. Celui-ci comporte une première extrémité axiale 11a et une seconde extrémité axiale 11b annulaires, reliées l'une à l'autre par au moins deux parties hélicoïdales 11c, 11d élastiquement déformables dans la direction axiale. Dans le cas de la figure 2, le nombre de parties hélicoïdales 11c, 11d est égal à deux. Les parties hélicoïdales 11c, 11d sont régulièrement réparties sur la circonférence, c'est-à-dire diamétralement opposées deux à deux, dans le cas d'un nombre pair de parties hélicoïdales.

Le nombre de spires de chaque partie hélicoïdale 11c, 11d est compris entre 2 et 6, par exemple 3,5 spires dans le cas de la figure 2, préférentiellement entre 2 et 3. Le ressort 11 est réalisé d'une seule pièce en un matériau métallique, par exemple en acier, en titane ou en alliage de titane.

Chaque partie hélicoïdale 11c, 11d peut présenter une section ronde ou polygonale, par exemple rectangulaire ou carrée.

Les différentes parties hélicoïdales 11c, 11d présentent un même diamètre.

Les extrémités axiales 11e des parties hélicoïdales 11c, 11d peuvent être reliées aux extrémités annulaires 11a, 11b du ressort 11 par des zones sans rupture de pente, par exemple par des zones inclinées 16 ou par des zones courbes 17, de façon à limiter localement les contraintes mécaniques.

Une telle structure permet de réduire les efforts de flambage et les frottements de façon à réduire l'hystérésis en fonctionnement et améliorer ainsi le fonctionnement et la durée de vie de l'injecteur 1.

## Revendications

1. Injecteur (1) de carburant pour une turbomachine, comportant un corps (2) comprenant une entrée de carburant (6) débouchant dans une chambre amont (5), et une sortie de carburant (9) reliée à une chambre aval (7), une soupape de dosage (10) étant montée entre la chambre amont (5) et la chambre aval (7), ladite soupape (10) étant soumise à l'action d'un ressort élastique de rappel (11) tendant à rappeler la soupape (10) vers une position fermée, le ressort (11) et la soupape (10) étant conçus pour autoriser l'ouverture de la soupape (10) et autoriser le passage de carburant de la chambre amont (5) à la chambre aval (7), au-delà d'une pression déterminée de carburant dans la chambre amont (5), le ressort de rappel (11) s'étendant selon l'axe (X) de déplacement de la soupape (10), **caractérisé en ce que** le ressort (11) comporte une première extrémité axiale (11a) et une seconde extrémité axiale (11b) annulaires, reliées l'une à l'autre par au moins deux parties hélicoïdales (11c, 11d) élastiquement déformables dans la direction axiale (X).

2. Injecteur (1) selon la revendication 1, **caractérisé en ce que** les parties hélicoïdales (11c, 11d) sont régulièrement réparties sur la circonférence.

3. Injecteur (1) selon la revendication 1 ou 2, **caractérisé en ce que** les parties hélicoïdales (11c, 11d) présentent un même diamètre.

4. Injecteur (1) selon l'une des revendications 1 à 3, **caractérisé en ce que** le nombre de spires est compris entre 2 et 3.

5. Injecteur (1) selon l'une des revendications 1 à 4, **caractérisé en ce que** le ressort (11) est réalisé d'une seule pièce en un matériau métallique, par exemple en acier, en titane ou en alliage de titane.

## Patentansprüche

1. Treibstoffinjektor (1) für eine Turbomaschine bzw. ein Turbotriebwerk, mit einem Körper (2), der einen in eine stromaufwärts gelegene Kammer (5) mündenden Treibstoffeinlass (6) und einen mit einer stromabwärts gelegenen Kammer (7) verbundenen Kraftstoffauslass (9) aufweist, wobei ein Dosierventil (10) zwischen der stromaufwärts gelegenen Kammer (5) und der stromabwärts gelegenen Kammer (7) angebracht ist, wobei das Ventil (10) der Wirkung einer elastischen Rückstellfeder (11) ausgesetzt ist, die bestrebt ist, das Ventil (10) in eine geschlossene Position zurückzustellen, wobei die Feder (11) und das Ventil (10) dazu ausgelegt sind, ab einem bestimmten Druck von Treibstoff in der stromaufwärts gelegenen Kammer (5) das Öffnen des Ventils (10) und den Durchtritt von Treibstoff von der stromaufwärts gelegenen Kammer (5) zur stromabwärts gelegenen Kammer (7) zuzulassen, wobei sich die Rückstellfeder (11) entlang der Verlagerungsachse (X) des Ventils (10) erstreckt, **dadurch gekennzeichnet, dass** die Feder (11) ein erstes axiales Ende (11a) und ein zweites axiales Ende (11b) aufweist, die ringförmig verlaufen und durch mindestens zwei schraubenförmige Abschnitte (11c, 11d) miteinander verbunden sind, die in der axialen Richtung (X) elastisch verformbar sind.

2. Injektor (1) nach Anspruch 1, **dadurch gekennzeichnet, dass** die schraubenförmigen Abschnitte (11c, 11d) gleichmäßig über den Umfang verteilt sind.

3. Injektor (1) nach Anspruch 1 oder 2, **dadurch gekennzeichnet, dass** die schraubenförmigen Abschnitte (11c, 11d) den gleichen Durchmesser aufweisen.

4. Injektor (1) nach einem der Ansprüche 1 bis 3, **dadurch gekennzeichnet, dass** die Anzahl an Windungen zwischen 2 und 3 liegt.

5. Injektor (1) nach einem der Ansprüche 1 bis 4, **dadurch gekennzeichnet, dass** die Feder (11) einstückig aus einem metallischen Werkstoff, beispielsweise aus Stahl, Titan oder einer Titanlegierung, hergestellt ist.

## Claims

1. A fuel injector (1) for a turbine engine, the injector comprising a body (2) having a fuel inlet (6) opening into an upstream chamber (5) and a fuel outlet (9) connected to a downstream chamber (7), a metering valve (10) being mounted between the upstream chamber (5) and the downstream chamber (7), said valve (10) being subjected to the action of an elastic return spring (11) tending to return the valve (10) to a closed position, the spring (11) and the valve (10) being designed to allow the opening of the valve (10) and to allow the passage of fuel from the upstream chamber (5) to the downstream chamber (7) above a given fuel pressure in the upstream chamber (5), the return spring (11) extending along the axis (X) of movement of the valve (10), **characterized in that** the spring (11) has a first axial end (11a) and a second axial end (11b) which are annular and are connected to one another by at least two helical parts (11c, 11d) which are elastically deformable in the axial direction (X).

2. An injector (1) according to claim 1, **characterized in that** the helical parts (11c, 11d) are evenly distributed over the circumference.

3. An injector (1) according to claim 1 or 2, **characterized in that** the helical parts (11c, 11d) have the same diameter.

4. An injector (1) according to one of claims 1 or 3, **characterized in that** the number of turns ranges from 2 to 3.

5. An injector (1) according to one of claims 1 to 4, **characterized in that** the spring (11) is made in one piece from a metallic material, for example steel, titanium or a titanium alloy.
